# EUROPEAN PATENT APPLICATION

(11) **EP 4 835 808 A1**
(43) Date of publication of application: **04.11.2026**
(21) Application number: 25173565.0
(22) Date of filing: 30.04.2025
(51) Int. Cl.: G06T 7/00

(54) **TECHNIQUE FOR QUALITY MEASURE DETERMINATION OF AN ADDITIVELY MANUFACTURED WORKPIECE**

(71) Applicant: Nikon SLM Solutions AG, 23560 Lübeck (DE)
(72) Inventor: Diaz del Castillo, Juan Miguel, 23560 Lübeck (DE); Grossmann, Dr. Willi, 23560 Lübeck (DE); Mahlmann, Daniel, 23560 Lübeck (DE)
(74) Representative: Schott, Jakob Valentin

(57) **Abstract**

The present disclosure relates to a method of training and/or using a machine learning model for non-destructively determining at least one quality measure of an additively manufactured three-dimensional workpiece produced by selective layerwise solidification of raw material. A computer program, a carrier, a computing unit and an additive manufacturing apparatus are also disclosed.

## Description

The present disclosure generally relates to a method of training and/or using a machine learning model for non-destructively determining at least one quality measure of an additively manufactured three-dimensional workpiece produced by selective layerwise solidification of raw material. A computer program, a carrier, a computing unit and an additive manufacturing apparatus are also disclosed.

Additive manufacturing techniques have gained importance over the last years and are now regularly used for producing various three-dimensional workpieces. One commonly used additive manufacturing technique involves selective layerwise solidification of raw material. This technique relies on depositing a raw material layer and solidifying the same in selected areas only. After this selective solidification, the next raw material layer is deposited atop the previous layer, and selectively solidified. This process is repeated iteratively layer by layer until a three-dimensional workpiece is formed by the solidified raw material.

One way to selectively solidify a layer of raw material involves irradiating selected areas of said layer with a particle beam or laser light. The irradiation heats up the irradiated raw material, leading to a solidification thereof. The raw material may be a raw material powder, for example a metal or metal alloy powder. The irradiation of a layer of such a powder may lead to sintering and/or melting of the raw material, which in turn leads to solidification of the material.

During an additive manufacturing process, various manufacturing errors may occur. For example, an irradiation of a layer may lead to the generation of spatter that may deposit on said layer. The raw material may comprise conglomerates of raw material powder. The raw material may not be solidified homogeneously in an irradiated portion, e.g. pores or micro-cracks may occur within a melt track. Other errors are also known to occur from time to time. Most of these errors can hardly be predicted and can result in three-dimensional workpieces having an unwanted low average density, a spatially inhomogeneous density, an unwanted high surface roughness and/or an unwanted microcrystalline structure.

The quality of three-dimensional workpieces produced by selective layerwise irradiation of raw material is of the utmost importance in certain use cases. For example, certain components of airplanes, rockets, satellites or medical equipment often must fulfil predefined criteria in order to be approved for use. These criteria for example include density, hardness, surface roughness and others.

In order to assess the quality of a three-dimensional workpiece produced by selective layerwise irradiation of raw material, different measurement methods are currently used. These measurement methods are typically conducted based on the finished three-dimensional workpiece, require a lot of time and/or are of a destructive nature (e.g., require taking samples of the workpiece to be analyzed).

In view of the above, there is a need for an improved technique for determining at least one quality measure of an additively manufactured three-dimensional workpiece.

According to a first aspect, a method for non-destructively determining at least one quality measure of an additively manufactured three-dimensional workpiece produced by selective layerwise solidification of raw material is provided. The method comprises: {a} obtaining a set of images that comprises, for each of a plurality of raw material layers used to additively manufacture a three-dimensional workpiece, an image of at least a portion of the raw material layer, wherein the image was acquired while the portion of the raw material layer depicted by said image was being irradiated for solidification thereof; and {b} analyzing the set of images, using a trained machine learning model, to determine at least one quality measure of the three-dimensional workpiece formed by the solidified portions of at least the plurality of raw material layers used to additively manufacture the three-dimensional workpiece.

According to a second aspect, a method of training a machine learning model usable to non-destructively determine at least one quality measure of an additively manufactured three-dimensional workpiece produced by selective layerwise solidification of raw material is provided. The method comprises: {c} obtaining a set of training images that comprises, for each of a plurality of raw material layers used to additively manufacture a three-dimensional test piece, a training image of at least a section of the raw material layer, wherein the training image was acquired while the section of the raw material layer depicted by said training image was being irradiated for solidification thereof; {d} obtaining measurement results indicative of at least one quality measure of the produced three-dimensional test piece; and {e} training a machine learning model based on the set of training images and the at least one quality measure indicated by the measurement results such that the trained machine learning model can determine the at least one quality measure of a three-dimensional workpiece based on a set of images that comprises, for each of a plurality of raw material layers used to additively manufacture the three-dimensional workpiece, an image of at least a portion of the raw material layer, wherein the image was acquired while the portion of the raw material layer depicted by said image was being irradiated for solidification thereof, the three-dimensional workpiece being formed by the solidified portions of at least the plurality of raw material layers used to additively manufacture the three-dimensional workpiece.

A test piece as understood herein is a three-dimensional object produced by selectively solidifying a plurality of raw material layers, the test piece being primarily used for (e.g., initially) training the machine learning model. This three-dimensional object may also be used for other purposes. In one example, the test piece is a three-dimensional workpiece. That is, a workpiece could be used as the test piece for (e.g., initially) training the machine learning model.

According to a third aspect, a method of training and using a machine learning model to non-destructively determine at least one quality measure of an additively manufactured three-dimensional workpiece produced by selective layerwise solidification of raw material is provided. The method of the third aspect may be a combination of the method of the second aspect and the method of the first aspect. The method comprises: {c} obtaining a set of training images that comprises, for each of a plurality of raw material layers used to additively manufacture a three-dimensional test piece, a training image of at least a section of the raw material layer, wherein the training image was acquired while the section of the raw material layer depicted by said training image was being irradiated for solidification thereof; {d} obtaining measurement results indicative of at least one quality measure of the produced three-dimensional test piece; {e} training a machine learning model based on the set of training images and the at least one quality measure indicated by the measurement results such that the trained machine learning model can determine the at least one quality measure of a three-dimensional workpiece based on a set of images that comprises, for each of a plurality of raw material layers used to additively manufacture the three-dimensional workpiece, an image of at least a portion of the raw material layer, wherein the image was acquired while the portion of the raw material layer depicted by said image was being irradiated for solidification thereof, the three-dimensional workpiece being formed by the solidified portions of at least the plurality of raw material layers used to additively manufacture the three-dimensional workpiece; {a} obtaining a set of images that comprises, for each of a plurality of raw material layers used to additively manufacture a three-dimensional workpiece, an image of at least a portion of the raw material layer, wherein the image was acquired while the portion of the raw material layer depicted by said image was being irradiated for solidification thereof; and {b} analyzing the set of images, using the trained machine learning model, to determine at least one quality measure of the three-dimensional workpiece formed by the solidified portions of at least the plurality of raw material layers used to additively manufacture the three-dimensional workpiece.

The following applies to the method of the first aspect, the method of the second aspect and the method of the third aspect.

According to the present disclosure, the term "image" refers to a two-dimensional image. The set of images may comprise at least one thermal image and/or at least one infrared image. One or more or each image of the set of images may be a thermal image and/or an infrared image. The set of training images may comprise at least one thermal training image and/or at least one infrared training image. One or more or each training image of the set of training images may be a thermal training image and/or an infrared training image. The thermal (e.g., training) image and/or the infrared (e.g., training) image may cover a wavelength spectrum including infrared light and light visibly by the human eye. The thermal (e.g., training) image and/or the infrared image (e.g., training) may represent spatial light intensities of light having wavelengths falling into a predefined wavelength range, the predefined wavelength range including infrared light wavelengths and, optionally, wavelength perceptible by the human eye. The thermal (e.g., training) image and/or the infrared (e.g., training) image may be representative of detected light having wavelengths in the range of 300 nm to 2000 nm, for example in the range of 400 nm to 1100 nm. A "thermal image" may be a visual representation of the (e.g., at least partially infrared) radiation emitted by a depicted object which is depicted as false color image. Such an image shows temperature variations across a surface of the object. For example, hotter areas may appear brighter (e.g., as white, red, or yellow) whereas cooler may appear darker (e.g., as blue, purple, or black) depending on the color scale used. Thermal images may be captured using one or more digital cameras, which are configured to detect infrared radiation instead of or in addition to visible light. Thermal images and infrared images are indicative of spatial temperature distributions. The inventors have recognized that images of irradiated portions of raw material, in particular temperature distributions across such portions, are a reliable basis for determining a quality measure of an additively manufactured three-dimensional workpiece. This even more so if multiple images of different layers are considered.

Each of one or more first images of the set of images may be or may have been generated based on a plurality of smaller images of different sub-portions of the raw material layer, wherein each of the plurality of smaller images was acquired while the respective sub-portion of the raw material layer was being irradiated for solidification thereof, the sub-portions of the raw material layer forming the portion of the raw material layer. Each of the one or more first images may be generated by virtually stitching the respective plurality of smaller images together to form said image. Different image stitching techniques can be used, as known to those skilled in the art. Exemplary image stitching techniques that can be used are disclosed on https://en.wikipedia.org/wiki/Image_stitching#. Obtaining the set of images may comprise generating the one or more first images based on the respective plurality of smaller images (e.g., by virtually stitching the smaller images of the plurality of smaller images together to form the respective first image). Obtaining the set of images may comprise acquiring, for each of the plurality of raw material layers, the plurality of smaller images while the respective sub-portion of the raw material layer is being irradiated for solidification thereof. This has the advantage that the plurality of images can consist of multiple smaller images each having a comparatively small imaging area (e.g., less than 50% of an entire raw material layer), while the first image generated based thereon can cover a larger imaging area (e.g., the entire raw material layer). This approach also allows for acquiring the smaller images with an optical sensor (e.g., a camera) having a movable field of view. For example, the optical sensor may be moved across the raw material layer while the smaller images are acquired.

Each of one or more second images of the set of images may be or have been acquired with a shutter time comprising the time during which the portion was being irradiated for solidification thereof and/or with a shutter time sufficient for an irradiation of the entire raw material layer used to additively manufacture the three-dimensional workpiece. Obtaining the set of images may comprise acquiring the one or more second images of the set of images with a shutter time comprising the time during which the portion was being irradiated for solidification thereof and/or with a shutter time sufficient for an irradiation of the entire raw material layer used to additively manufacture the three-dimensional workpiece. In these cases, the one or more second images may each cover an imaging area that depicts more than 50%, for example 100% of the raw material layer. This approach also allows using a single image per layer, thereby reducing image acquisition and image processing effort (e.g., no stitching of smaller images may be required).

Two or more or all of the layers of the plurality of raw material layers used to additively manufacture the three-dimensional workpiece may be consecutive raw material layers. The set of images may comprise, for each of a plurality of subsequent raw material layers used to additively manufacture the three-dimensional workpiece, an image of at least a portion of the raw material layer. The inventors have recognized that the irradiated portions of lower layers have an effect on the overlying portions of the higher layers, with this effect being especially significant for consecutive raw material layers.

The plurality of raw material layers used to additively manufacture the three-dimensional workpiece, which layers are depicted by the images of the set of images, may consist of more than 3 layers and/or less than 15 layers. The set of images may consist of images of more than 3 different layers and/or less than 15 layers. It has shown that the effect of an irradiated portion of an underlying lower layer is most significant for the next few layers, decreasing from one overlying layer to the next one. After approximately 15 overlying layers, the effect of an irradiated portion onto the current uppermost layer is hardly detectable any more. In case less than 3 layers are considered, the effect on the subsequent layers would be ignored, potentially leading to results having lower reliability. Also, the higher the number of layers, the higher the processing requirements. A number of 3 to 15 layers has proven to be a good tradeoff between these factors. That being said, depending on the use case and the quality measure of interest, other numbers of layers may be considered (e.g., all layers forming the three-dimensional workpiece).

For example, in a view onto the plurality of raw material layers used to additively manufacture the three-dimensional workpiece (e.g., a view along the z-axis and/or along a normal to the surface of one or more of the plurality of raw material layers), the portions of different layers of the plurality of raw material layers used to additively manufacture the three-dimensional workpiece overlap one another and/or are coextensive with one another. The inventors have recognized that the influence of irradiated portions that overlap one another and/or are coextensive to another is larger compared with an interaction between irradiated portions that do not overlap and/or are not coextensive to another.

For example, at least one of a shape, a size (e.g., in the x- and/or y-direction), an orientation (e.g., in the x-/y-plane and/or in a plane parallel to the surface of one or more of the plurality of raw material layers) and a location (e.g., in the x-/y-plane) of the portion is similar between two or more or all of the plurality of raw material layers used to additively manufacture the three-dimensional workpiece (e.g., in a view onto the plurality of raw material layers used to additively manufacture the three-dimensional workpiece). The inventors have recognized that the influence of irradiated portions that have such similar geometrical parameters is larger compared with an interaction between irradiated portions that do not.

The method may further comprise selecting, from each of two or more or all of the images of the set of images, at least one image area, each image area depicting (e.g., only) a part of the portion of the raw material layer depicted by said image. Analyzing the set of images may comprises analyzing (e.g., only) the selected image areas, using the trained machine learning model, to determine the at least one quality measure. Only the selected image areas may be used as input of the trained machine learning model. The inventors have recognized that such a selection-based analysis of (e.g., only) the irradiated portions yields reliable results while optimizing computational resource usage.

For example, at least one of a shape, a size (e.g., in the x- and/or y-direction), an orientation and a location (e.g., in the x-/y-plane and/or in a plane parallel to the surface of one or more of the plurality of raw material layers) of the part is similar between all of the plurality of raw material layers used to additively manufacture the three-dimensional workpiece. Each part may have a maximum longitudinal extension of 100 µm to 10 mm, for example 300 µm to 5 mm (e.g., 1 mm to 3 mm). Each part may be a square with side lengths corresponding to said maximum longitudinal extension. Generally speaking, the smaller the part, the higher the spatial resolution of the technique disclosed herein. On the other hand, it has been discovered that an irradiated first part of a given layer also has an influence on an irradiated second part of a neighboring layer, even if said first and second part are offset from one another in the x-direction and/or the y-direction (e.g., in the horizontal direction and/or the vertical direction in a view onto the raw material layers (e.g., along a surface normal of an uppermost raw material layer)). For example, an irradiation of a point of a raw material layer may lead to a generation of spatter that is deposited 1 mm away from said point. If one were to analyze overlapping parts of neighboring layers that each have a maximum longitudinal extension of 20 µm, the effect of spatter from one part on the other overlying part may not be able to be detected reliably. The ranges given above have proven to be a good compromise between spatial resolution, reliability of the results and computational resource usage. That being said, depending on the use case and the quality measure of interest, other ranges may be considered.

For example, all image areas associated with respective parts having a similar shape, size, orientation and/or location may have (e.g., in image coordinates) a similar shape, size, orientation and/or location.

The at least one image area may be a plurality of image areas. In this case, the method may further comprise grouping the selected image areas into a plurality of groups, each group comprising, for each of two or more or all of the plurality of raw material layers used to additively manufacture the three-dimensional workpiece, exactly one of the selected image areas. Analyzing the set of images may comprise separately analyzing each of the groups of selected image areas, using the trained machine learning model, to determine the at least one quality measure. Each of the groups of selected image areas may be used as a (e.g., separate) input of the trained machine learning model. The inventors have recognized that such a group-based analysis yields reliable results while optimizing computational resource usage.

The at least one quality measure may be determined by the trained machine learning model with a spatial resolution (e.g., for a plurality of points on or in the three-dimensional workpiece and/or for a plurality of parts of the three-dimensional workpiece). The at least one quality measure may be determined by the trained machine learning model for a plurality of positions differing in their x-coordinates, in their y-coordinates and/or in their z-coordinates. The at least one quality measure may be determined by the trained machine learning model for one of the plurality of (e.g., depicted) raw material layers used to additively manufacture the three-dimensional workpiece. The at least one quality measure may be separately determined by the trained machine learning model for each of the plurality of (e.g., depicted) raw material layers used to additively manufacture the three-dimensional workpiece. The at least one quality measure may be specific for the one of the plurality of raw material layers used to additively manufacture the three-dimensional workpiece. The at least one quality measure may be determined by the trained machine learning model (e.g., only) for the earliest irradiated raw material layer of the plurality of (e.g., depicted) layers used to additively manufacture the three-dimensional workpiece. The at least one quality measure may be specific for the earliest irradiated (e.g., depicted) raw material layer of the plurality of (e.g., depicted) layers used to additively manufacture the three-dimensional workpiece.

The at least one quality measure may determined (e.g., only) for the portion of the one of the plurality of (e.g., depicted) raw material layers used to additively manufacture the three-dimensional workpiece. The at least one quality measure may specific for the portion of the one of the plurality of (e.g., depicted) raw material layers used to additively manufacture the three-dimensional workpiece.

It has shown that when analyzing images of multiple subsequent raw material layers, the root cause of a defect often lies in a lower one of these layers. For example, a pore erroneously formed when irradiating a portion of a first layer has a large effect in the solidification of the next, second layer and a smaller effect in the solidification of the next, third layer. When analyzing these three layers, the size and/or behavior of the defect across the three multiple layers can be indicative of the quality measure of interest (e.g., a density) and the location of the root cause of the defect. Accordingly, the above features enable a reliable determination of the at least one quality measure and also allow localizing the same within the three-dimensional workpiece (e.g., by detecting the first layer and/or the first portion of said first layer at which a certain defect was present).

The at least one quality measure may comprise a density index indicative of a density of at least a part of the three-dimensional workpiece. The density index may comprise a minimum density, an average density, a maximum density and/or a spatial density distribution.

The at least one quality measure may comprise a spatter index indicative of spatter produced when manufacturing at least a (e.g., the) part of the three-dimensional workpiece. The spatter index may comprise a total mass of spatter, a total volume of spatter, a size of a smallest spatter particle, a size of a largest spatter particular, an average size of spatter particles and/or a spatter particle size distribution.

The at least one quality measure may comprise a microstructure index indicative of a material microstructure of at least a (e.g., the) part of the three-dimensional workpiece. The microstructure index may comprise a lowest microcrystal grain size, an average microcrystal grain size, a highest microcrystal grain size, a (e.g., spatial) microcrystal grain size distribution and/or a (e.g., spatially varying) grain structure (e.g., body-centric cubic, face-centric cubic, hexagonal close-packed).

The at least one quality measure may comprise a surface roughness index indicative of a surface roughness of a layer or surface of at least a (e.g., the) part of the three-dimensional workpiece. The surface roughness index may comprise a lowest surface roughness, an average surface roughness, a highest surface roughness, an absolute surface roughness, a relative surface roughness and/or a surface roughness distribution.

In one example, the training of the machine learning model is performed in a similar manner as the determination of the at least one quality measure, but using the set of training images instead of the set of images. The measurement results and/or the quality measure(s) indicated by the measurement results may be used as gold standard reference for the to-be-trained machine learning model. The measurement results and/or the quality measure(s) indicated by the measurement results may thus be used as a feedback for the machine learning model being trained. It is also possible to train the machine learning model with the set of training images, labeled with the measurement results and/or the quality measure(s) indicated by said measurement results. The machine learning model may be trained using supervised learning or unsupervised learning. The image data used as input for the trained machine learning model may have the same format (e.g., same number of images within the set, same geometric properties (e.g., shape, size, position and/or orientation) of image areas and/or same geometric properties of the depicted parts of the irradiated portions of the raw material layers) as the image data used for training the machine learning model.

Each of one or more first images of the set of training images may be or may have been generated based on a plurality of smaller training images of different sub-sections of the raw material layer, wherein each of the plurality of smaller training images was acquired while the respective sub-section of the raw material layer was being irradiated for solidification thereof, the sub-sections of the raw material layer forming the section of the raw material layer. Each of the one or more first training images may be generated by virtually stitching the respective plurality of smaller training images together to form said training image. Different image stitching techniques can be used, as known to those skilled in the art. Exemplary image stitching techniques that can be used are disclosed on https://en.wikipedia.org/wiki/Image_stitching#. Obtaining the set of training images may comprise generating the one or more first training images based on the respective plurality of smaller training images (e.g., by virtually stitching the smaller training images of the plurality of smaller training images together to form the respective first training image). Obtaining the set of training images may comprise acquiring, for each of the plurality of raw material layers, the plurality of smaller training images while the respective sub-portion of the raw material layer is being irradiated for solidification thereof. This has the advantage that the plurality of training images can consist of multiple smaller training images each having a comparatively small imaging area (e.g., less than 50% of an entire raw material layer), while the first training image generated based thereon can cover a larger imaging area (e.g., the entire raw material layer). This approach also allows for acquiring the smaller training images with an optical sensor (e.g., a camera) having a movable field of view. For example, the optical sensor may be moved across the raw material layer while the smaller training images are acquired.

Each of one or more second training images of the set of training images may be or have been acquired with a shutter time comprising the time during which the portion was being irradiated for solidification thereof and/or with a shutter time sufficient for an irradiation of the entire raw material layer used to additively manufacture the three-dimensional test piece. Obtaining the set of training images may comprise acquiring the one or more second training images of the set of training images with a shutter time comprising the time during which the portion was being irradiated for solidification thereof and/or with a shutter time sufficient for an irradiation of the entire raw material layer used to additively manufacture the three-dimensional test piece. In these cases, the one or more second training images may each cover an imaging area that depicts more than 50%, for example 100% of the raw material layer. This approach also allows using a single training image per layer, thereby reducing training image acquisition and training image processing effort (e.g., no stitching of smaller training images may be required).

Two or more or all of the layers of the plurality of raw material layers used to additively manufacture the three-dimensional test piece may be consecutive raw material layers. That is, the set of training images may comprise, for each of a plurality of subsequent raw material layers used to additively manufacture the three-dimensional test piece, an image of at least a section of the raw material layer.

Two or more or all of the layers of the plurality of raw material layers used to additively manufacture the three-dimensional test piece may be consecutive raw material layers. The set of training images may comprise, for each of a plurality of subsequent raw material layers used to additively manufacture the three-dimensional test piece, an image of at least a section of the raw material layer.

The plurality of raw material layers used to additively manufacture the three-dimensional test piece, which layers are depicted by the training images of the set of training images, may consist of more than 3 layers and/or less than 15 layers. The set of training images may consist of training images of more than 3 different layers and/or less than 15 layers.

For example, in a view onto the plurality of raw material layers used to additively manufacture the three-dimensional test piece (e.g., a view along the z-axis and/or along a normal to the surface of one or more of the plurality of raw material layers), the sections of different layers of the plurality of raw material layers used to additively manufacture the three-dimensional test piece overlap one another and/or are coextensive with one another.

For example, at least one of a shape, a size (e.g., in the x- and/or y-direction), an orientation (e.g., in the x-/y-plane and/or in a plane parallel to the surface of one or more of the plurality of raw material layers) and a location (e.g., in the x-/y-plane) of the section is similar between two or more or all of the plurality of raw material layers used to additively manufacture the three-dimensional test piece (e.g., in a view onto the plurality of raw material layers used to additively manufacture the three-dimensional test piece).

The method may further comprise selecting, from each of two or more or all of the training images of the set of training images, at least one image segment, each image segment depicting (e.g., only) a subsection of the section of the raw material layer depicted by said training image. Training the machine learning model based on the set of training images and the measurement results may comprise training the machine learning model based on the selected image segments of the set of training images and based on the measurement results.

For example, at least one of a shape, a size (e.g., in the x- and/or y-direction), an orientation and a location (e.g., in the x-/y-plane and/or in a plane parallel to the surface of one or more of the plurality of raw material layers) of the subsection is similar between all of the plurality of raw material layers used to additively manufacture the three-dimensional test piece. Each subsection may have a maximum longitudinal extension of 100 µm to 10 mm, for example 300 µm to 5 mm (e.g., 1 mm to 3 mm). Each subsection may be a square with side lengths corresponding to said maximum longitudinal extension.

For example, all image areas associated with respective subsections having a similar shape, size, orientation and/or location may have (e.g., in image coordinates) a similar shape, size, orientation and/or location.

For example, all image segments may have a similar shape, size, orientation and/or location as the image areas. For example, all parts of the irradiated portion(s) may have a similar shape, size, orientation and/or position as the subsections of the irradiated section(s). This makes them more comparable, leading to an improved reliability of the results output by the trained machine learning model.

The at least one image segment may be a plurality of image segments. In this case, the method may further comprise grouping the selected image segments into a plurality of collections, each collection comprising, for each of two or more or all of the plurality of raw material layers used to additively manufacture the three-dimensional test piece, exactly one of the selected image segments. Training the machine learning model based on the set of training images may comprise training the machine learning model by using each of the collections of selected image segments as a separate training input.

The at least one quality measure may be indicated by the measurement results with a spatial resolution (e.g., for a plurality of points on or in the three-dimensional test piece and/or for a plurality of parts of the three-dimensional test piece). The at least one quality measure may be indicated by the measurement results for a plurality of positions differing in their x-coordinates, in their y-coordinates and/or in their z-coordinates. The at least one quality measure may be indicated by the measurement results for one of the plurality of (e.g., depicted) raw material layers used to additively manufacture the three-dimensional test piece. The at least one quality measure may be separately indicated by the measurement results for each of the plurality of (e.g., depicted) raw material layers used to additively manufacture the three-dimensional test piece. The at least one quality measure indicated by the measurement results may be specific for the one of the plurality of raw material layers used to additively manufacture the three-dimensional test piece. The at least one quality measure may be indicated by the measurement results (e.g., only) for the earliest irradiated raw material layer of the plurality of (e.g., depicted) layers used to additively manufacture the three-dimensional test piece. The at least one quality measure indicated by the measurement results may be specific for the earliest irradiated (e.g., depicted) raw material layer of the plurality of (e.g., depicted) layers used to additively manufacture the three-dimensional test piece. The at least one quality measure may be indicated by the measurement results (e.g., only) for the portion of the one of the plurality of (e.g., depicted) raw material layers used to additively manufacture the three-dimensional test piece. The at least one quality measure indicated by the measurement results may specific for the portion of the one of the plurality of (e.g., depicted) raw material layers used to additively manufacture the three-dimensional test piece.

Training the machine learning model based on the measurement results may comprise training the machine learning model based on a density index indicative of a density of at least a part of the three-dimensional test piece, said density index being comprised in the at least one quality measure indicated by the measurement results. The density index may be derived from at least one x-ray image of the three-dimensional test piece. The method may comprise obtaining at least one x-ray image and deriving, for one or more parts of the test piece, the density index from the at least one x-ray image. Alternatively, or in addition, the density index may be derived from eddy current measurements performed on one or more irradiated sections of the plurality of raw material layers used to produce the three-dimensional test piece. The method may comprise obtaining the eddy current measurements and deriving, for one or more parts of the test piece, the density index from the eddy current measurements. Alternatively, or in addition, the density index may be derived from at least one synchrotron measurement of the three-dimensional test piece. The method may comprise obtaining at least one synchrotron measurement of the three-dimensional test piece and deriving, for one or more parts of the test piece, the density index from the at least one synchrotron measurement. Alternatively, or in addition, the density index may be derived from at least one ultrasound measurement of the three-dimensional test piece. The method may comprise obtaining at least one ultrasound measurement of the three-dimensional test piece and deriving, for one or more parts of the test piece, the density index from the at least one ultrasound measurement. As explained above, the density index may comprise a minimum density, an average density, a maximum density and/or a spatial density distribution.

Training the machine learning model based on the measurement results may comprise training the machine learning model based on a spatter index indicative of spatter produced when manufacturing at least a part of the three-dimensional test piece, said spatter index being comprised in the at least one quality measure indicated by the measurement results. The spatter index may be derived from a plurality of surveillance images acquired, for each of one or more of the plurality of raw material layers used to produce the three-dimensional test piece, while said raw material layer was being selectively solidified by irradiation thereof. The method may comprise obtaining the plurality of surveillance images and deriving, for one or more parts of the test piece, the spatter index from the plurality of surveillance images. As explained above, the spatter index may comprise a total mass of spatter, a total volume of spatter, a size of a smallest spatter particle, a size of a largest spatter particular, an average size of spatter particles and/or a spatter particle size distribution.

Training the machine learning model based on the measurement results may comprise training the machine learning model based on a microstructure index indicative of a material microstructure of at least a part of the three-dimensional test piece, said microstructure index being comprised in the at least one quality measure indicated by the measurement results. The microstructure index may be derived from at least one microscopic image of at least one slice of the produced test piece. The method may comprise obtaining the at least one microscopic image and deriving, for one or more parts of the test piece, the microstructure index from the at least one microscopic image. As explained above, the microstructure index may comprise a lowest microcrystal grain size, an average microcrystal grain size, a highest microcrystal grain size, a (e.g., spatial) microcrystal grain size distribution and/or a (e.g., spatially varying) grain structure (e.g., body-centric cubic, face-centric cubic, hexagonal close-packed).

Training the machine learning model based on the measurement results may comprise training the machine learning model based on a surface roughness index indicative of a surface roughness of a layer or surface of at least a part of the three-dimensional test piece. The surface roughness index may be derived from surface roughness measurements performed on irradiated sections of one or more of the plurality of raw material layers used to produce the three-dimensional test piece. The method may comprise obtaining the surface roughness measurements and deriving, for one or more parts of the test piece, the surface roughness index from the surface roughness measurements. As explained above, the surface roughness index may comprise a lowest surface roughness, an average surface roughness, a highest surface roughness, an absolute surface roughness, a relative surface roughness and/or a surface roughness distribution.

According to a fourth aspect, a computer program is provided. The computer program comprises instructions which, when executed by at least one processor, cause the at least one processor to perform the method of any one of the preceding aspects.

According to a fifth aspect, a carrier is provided. The carrier carries the computer program of the fourth aspect. The carrier may be a data stream or a (e.g., non-transitory) computer storage medium.

According to a sixth aspect, a computing unit is provided. The computing unit comprises at least one processor and at least one memory, the at least one memory storing instructions which, when executed by the at least one processor, cause the at least one processor to perform the method of the first aspect, the method of the second aspect and/or the method of the third aspect.

According to a seventh aspect, an additive manufacturing apparatus is provided. The apparatus is configured to additively manufacture three-dimensional workpieces by selective layerwise solidification of raw material. The apparatus comprises the computing unit of the sixth aspect and/or the carrier of the fifth aspect.

The apparatus may further comprise a powder deposition unit configured to deposit a raw material layer. The raw material may be a raw material powder, for example a metal powder. The apparatus may comprise an irradiation unit configured to selectively irradiate a deposited raw material layer (e.g., with a particle beam or with a laser beam). The apparatus may comprise at least one optical sensor. The at least one optical sensor may comprise a camera, for example a digital camera. The at least one optical sensor may be configured to acquire the images, the smaller images, the test images and/or the smaller test images. The apparatus may comprise an interface configured to receive the measurement results.

The technique will now be explained with reference to the drawings, wherein similar reference signs refer to similar structural or functional features with additions of -1, - 2, and -3 indicating the respective layers, and wherein:
- Fig. 1: illustrates a first exemplary additive manufacturing apparatus;
- Fig. 2: illustrates a second exemplary additive manufacturing apparatus;
- Fig. 3: illustrates a set of images;
- Fig. 4: illustrates a set of training images;
- Fig. 5: is a flow diagram a first exemplary method; and
- Fig. 6: is a flow diagram of a second exemplary method.

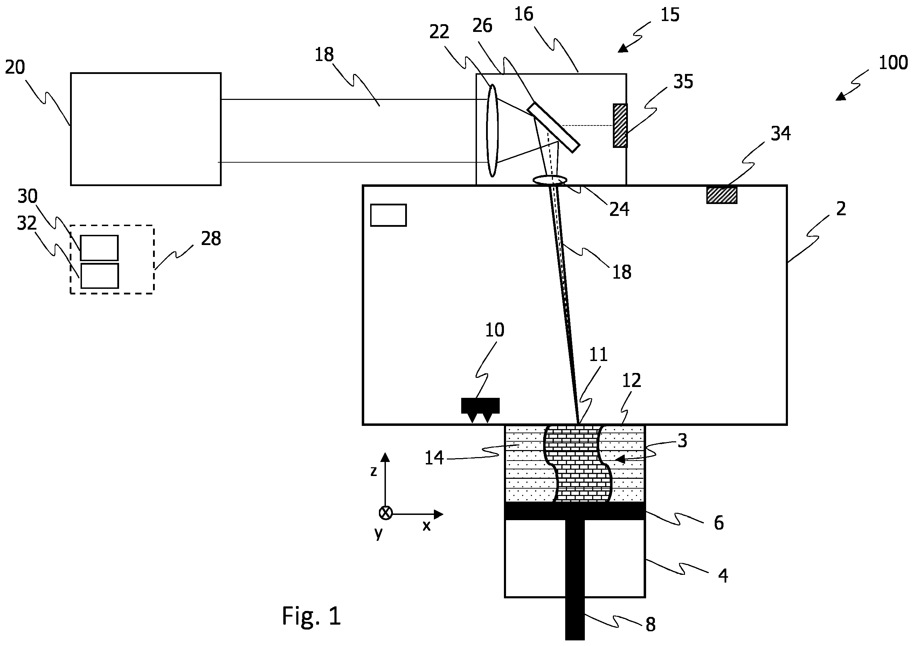

Fig. 1 illustrates a first exemplary additive manufacturing apparatus 100. The apparatus 100 is configured to produce a three-dimensional workpiece 3 by selective layerwise solidification of raw material. The apparatus 100 comprises a sealed process chamber 2 containing a process gas atmosphere. The apparatus 100 further comprises a build cylinder 4 attached to the process chamber 2 and housing a build platform 6 that can be moved up and down along the z-axis by a movement system 8. The apparatus further comprises a powder deposition unit 10 configured to spread layers 12 of raw material powder 14 (e.g., metal powder) across the build platform 6 in the x-/y-plane. The apparatus comprises an irradiation unit 15 configured to irradiate a raw material layer deposited by the powder deposition unit 10. In the illustrated example, the irradiation unit 15 comprises a scanning unit 16 configured to scan a laser beam 18 across the deposited raw material layer 12. The apparatus 100 also comprises a laser light source 20 configured to provide the laser beam 18. The scanning unit 16 may comprise focusing lenses 22, 24 configured to focus the laser beam 18. The scanning unit 16 comprises at least one movable scanning mirror 26 reflecting the laser beam 18 onto a wanted impingement point 11 on the raw material layer 12. The apparatus further comprises a control unit 28, also referred to as computing unit herein, including a processor 30 and a memory 32. The processor 30 is configured to perform one or more of the methods disclosed herein. The memory 32 stores instructions which, when executed by the processor 30, cause the processor 30 to perform one or more of the methods disclosed herein.

The apparatus comprises at least one optical sensor 34, 35 configured to acquire one or more images of at least a part of a raw material layer 12. Each optical sensor 34, 35 may be a camera, for example a digital camera. As shown in Fig. 1, the optical sensor 34 may be arranged in the process chamber 2 with its field of view directed towards the layer 12, in which case an image acquired by said sensor 34 may depict the entire layer 12. The optical sensor 35 may be arranged to capture the powder layer 12 via the scanning unit 16 or another scanning unit, in which case an image acquired by said sensor 35 may depict only a part of the layer 12, preferably a part including the impingement point 11 of the laser beam 18. It is possible that the apparatus 100 comprises one or both of the sensors 34, 35 and/or additional optical sensors configured to acquire one or more images of at least a part of a raw material layer 12.

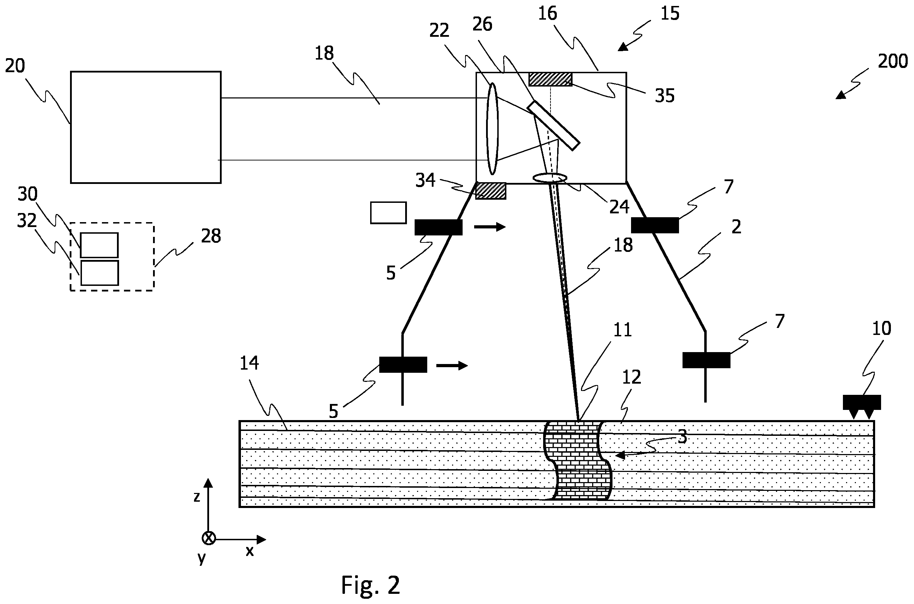

Fig. 2 illustrates a second exemplary additive manufacturing apparatus 200. Only the differences with respect to the apparatus 100 will be explained.

The process chamber 2 of the apparatus 200 is not sealed and not fixed relative to the layer 12, but can be moved across the layer 12. A process gas injected through at least one inlet 5 into the process chamber 2 can flow out of the process chamber 2 through at least one outlet 7 of the process chamber 2. This may guarantee a laminar gas flow from the inlet(s) 5 to the outlet(s) 7. The powder deposition unit 10 can be located outside the process chamber 2 or inside the process chamber 2 and can move independently of the process chamber 2 or dependent on a movement of the process chamber 2 (e.g., when fixed to the process chamber 2). The sensor 34 may be configured to acquire an image of all parts of the powder layer 12 that are currently located beneath the process chamber 2. The sensor 35 may be configured to acquire an image containing the impingement point 11 and depicting only parts of the powder layer 12 that are currently located beneath the process chamber 2. The layers 12 may either be deposited on a movable build platform 6 (e.g., movably arranged within a build cylinder 4, or as a free-standing build platform) or on an immovable build platform 6. In the latter case, the process chamber 2 may be movable in the z-direction to keep a distance between the irradiation unit 15 and the uppermost layer 12 within an acceptable predefined range.

Other additive manufacturing apparatuses may also be used in the context of the technique disclosed herein, provided they are configured to additively manufacture three-dimensional workpieces by selective layerwise solidification of raw material. Such apparatuses may then comprise the control unit 30 and/or the memory 32.

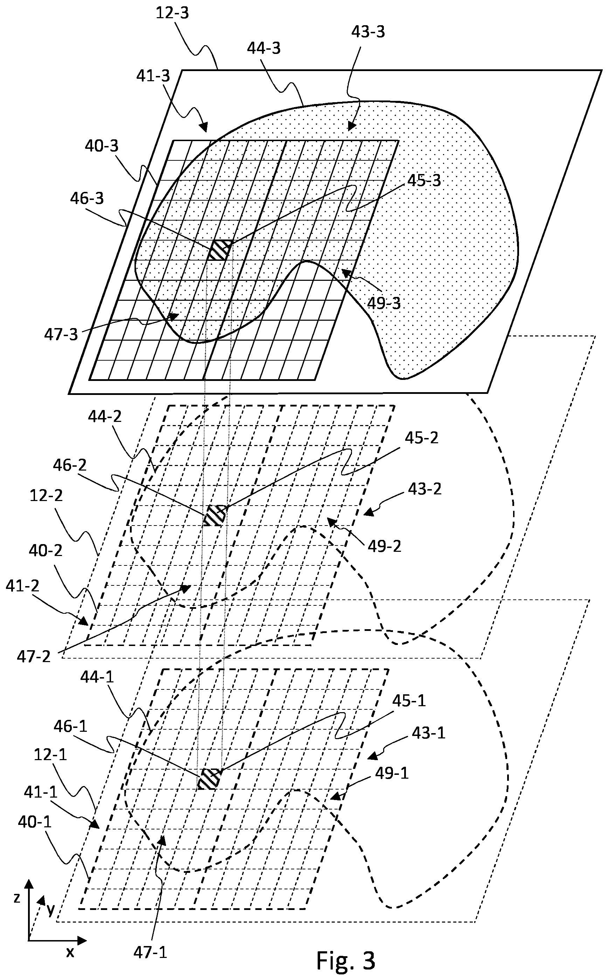

Fig. 3 illustrates a set of thermal images 40-1, 40-2, 40-3, each thermal image depicting (e.g., a surface of) a different consecutive raw material layer 12-1, 12-2, 12-3 used to additively manufacture a three-dimensional workpiece 3. In the illustrated example, each thermal image 40 was generated by (virtually) stitching two smaller images 41, 43 together, each smaller image 41, 43 depicting a respective sub-portion 47, 49 together forming the portion 44. In this case, each smaller image 41, 43 may be acquired by the optical sensor 35. It is also possible for each image 40 to be captured by the optical sensor 34 as such, in which case virtual stitching may be omitted.

Each raw material layer 12 depicted by the images 40 comprises a portion 44 that was solidified by irradiation thereof in order to produce the three-dimensional workpiece 3. In this case, each image 40 consists of a plurality of image areas 46, at least some of which depict a respective part 45 of the portion 44 of the raw material layer 12.

In the illustrated example, the image areas 46 of each image are squares that form a tile pattern having a square grid. Each part 45 may have a side length in the x-direction of 2 mm and a side length in the y-direction of 2 mm.

The image areas 46 of the different images 40 are aligned with one another in the x-direction and the y-direction. That is, each of the image areas 46 of the image 40-1 has an associated image area 46 of the image 40-2 and another associated image area 46 of the image 40-3, the associated image areas being coextensive in a view onto the x-/y-plane, i.e., in a view along the z-direction. These associated image areas 46 can be grouped together as a group.

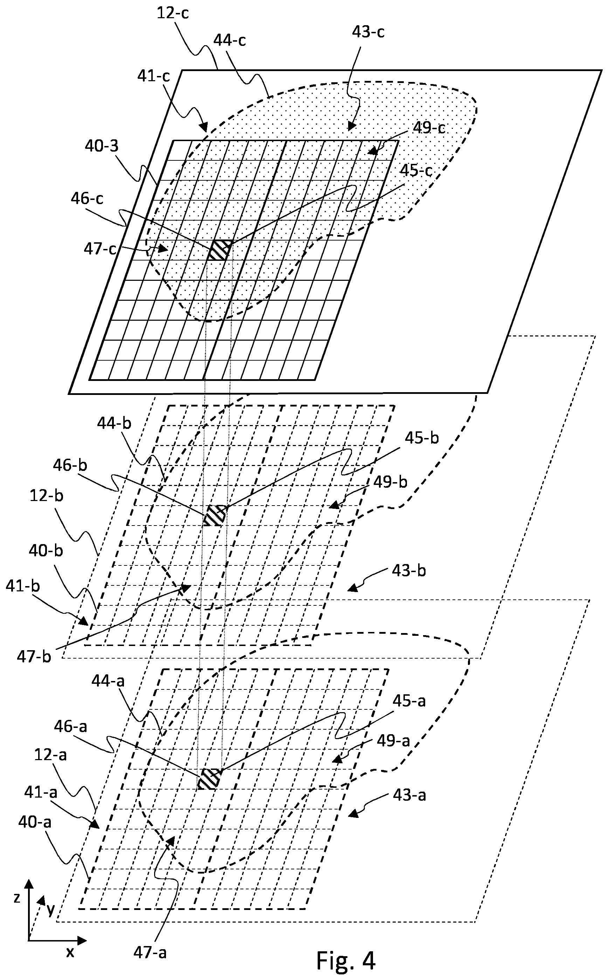

Fig. 4 illustrates a set of thermal training images 40-a, 40-b, 40-c, each training image depicting (e.g., a surface of) a different consecutive raw material layer 12-a, 12-b, 12-c used to additively manufacture a three-dimensional test piece 3. In the illustrated example, each training image 40 was generated by virtually stitching two smaller training images 41, 43 together, each smaller training image 41, 43 depicting a sub-section 47, 49 together forming the section 44. In this case, each smaller training image 41, 43 may be acquired by the optical sensor 35. It is also possible for each training image 40 to be captured by the optical sensor 34 as such, in which case virtual stitching may be omitted.

Each raw material layer 12 depicted by the images 40 comprises a section 44 that was solidified by irradiation thereof in order to produce the three-dimensional test piece 3. In this case, each training image 40 consists of a plurality of image segments 46, at least some of which depict a respective subsection 45 of the section 44 of the raw material layer 12.

In the illustrated example, the image segments 46 of each training image are squares that form a tile pattern having a square grid. Each part 45 may have a side length in the x-direction of 2 mm and a side length in the y-direction of 2 mm.

The image segments 46 of the different training images 40 are aligned with one another in the x-direction and the y-direction. That is, each of the image segments 46-a of the training image 40-a has an associated image segment 46-b of the training image 40-b and another associated image segments 46-c of the training image 40-c, the associated image segments being coextensive in a view onto the x-/y-plane, i.e., in a view along the z-direction. These associated image segments 46 can be grouped together as a collection.

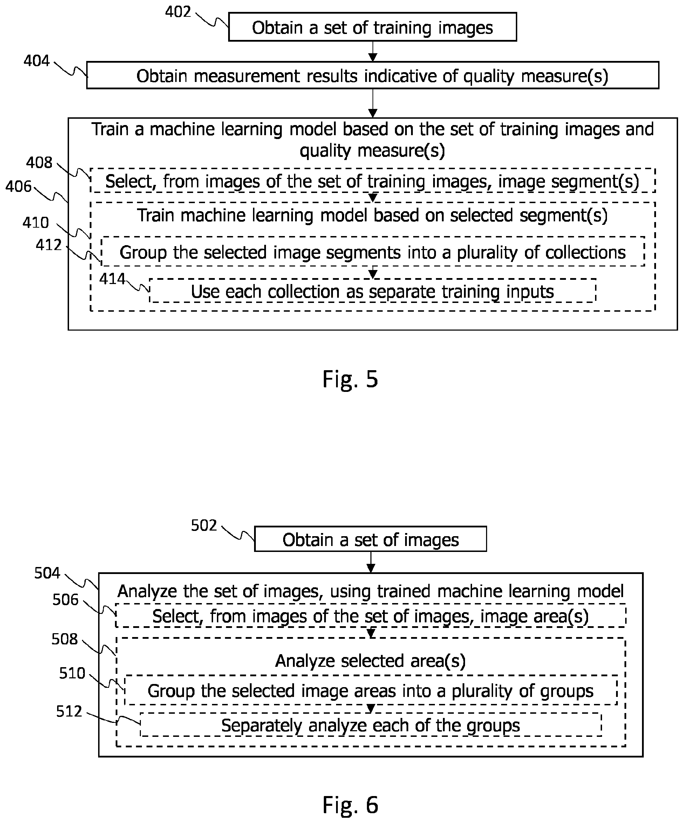

Fig. 5 illustrates a flowchart of a first exemplary method, which may also be referred to as training method. Optional steps are indicated in dashed lines. The method may be performed by the processor 30. The memory 32 may store instructions which, when executed by the processor 30, cause the processor 30 to perform this method.

At 402, a set of training images (e.g., 40-a to 40-c) is obtained. The set of training images comprises, for each of a plurality of raw material layers (e.g., 12-a to 12-c) used to additively manufacture a three-dimensional test piece, a training image of at least a section (e.g., 44-a to 44-c) of the raw material layer, wherein the training image was acquired while the section of the raw material layer depicted by said training image was being irradiated for solidification thereof.

At 404, measurement results are obtained. The measurement results are indicative of at least one quality measure of the produced three-dimensional test piece.

At 406, a machine learning model is trained based on the set of training images and the at least one quality measure indicated by the measurement results. The machine learning model is trained such that the trained machine learning model can determine the at least one quality measure of a three-dimensional workpiece (e.g., 3) based on a set of images (e.g., 40-1 to 40-3) that comprises, for each of a plurality of raw material layers (e.g., 12-1 to 12-3) used to additively manufacture the three-dimensional workpiece, an image of at least a portion (e.g., 44-a to 44-3) of the raw material layer, wherein the image was acquired while the portion of the raw material layer depicted by said image was being irradiated for solidification thereof, the three-dimensional workpiece being formed by the solidified portions of at least the plurality of raw material layers used to additively manufacture the three-dimensional workpiece.

As an optional part of 406, at 408, from each of two or more or all of the training images of the set of training images (e.g., 40-a to 40-c), at least one image segment (e.g., 46-a; 46-b; 46-c) is selected, each image segment depicting a subsection (e.g., 45-a to 45-c) of the section (e.g., 44-a to 44-c) of the raw material layer (e.g., 12-a, 12-b or 12-c) depicted by said image.

As an optional part of 406, at 410, the machine learning model is trained based on the selected image segments of the set of training images and based on the measurement results.

As an optional part of 410, at 412, the selected image segments are grouped into a plurality of collections, each collection comprising, for each of two or more or all of the plurality of raw material layers (e.g., 12-a to 12-c) used to additively manufacture the three-dimensional test piece, exactly one of the selected image segments (e.g., 46-a to 46-c).

As an optional part of 410, at 414, the machine learning model is trained by using each of the collections of selected image segments as a separate training input.

Fig. 6 illustrates a flowchart of a second exemplary method, which may also be referred to as analysis method. Optional steps are indicated in dashed lines. The method may be performed by the processor 30. The memory 32 may store instructions which, when executed by the processor 30, cause the processor 30 to perform this method. The second exemplary method may follow the first exemplary method. For example, 406 may precede 502 and/or 504.

At 502, a set of images (e.g., 40-1 to 40-3) is obtained that comprises, for each of a plurality of raw material layers (e.g., 12-1 to 12-3) used to additively manufacture a three-dimensional workpiece (e.g., 3), an image of at least a portion (e.g., 44-1 to 44-3) of the raw material layer, wherein the image was acquired while the portion of the raw material layer depicted by said image was being irradiated for solidification thereof.

At 504, the set of images is analyzed, using a trained machine learning model (e.g., the machine learning model trained at 406), to determine at least one quality measure of the three-dimensional workpiece formed by the solidified portions of at least the plurality of raw material layers (e.g., 12-1 to 12-3) used to additively manufacture the three-dimensional workpiece.

As an optional part of 504, at 506, from each of two or more or all of the images of the set of images, at least one image area (e.g., 46-1 to 46-3) is selected, each image area depicting a part of the portion (e.g., 44-1 to 44-3) of the raw material layer (e.g., 12-1 to 12-3) depicted by said image.

As an optional part of 504, at 508, the selected image areas are analyzed, using the trained machine learning model, to determine the at least one quality measure.

As an optional part of 508, at 510, the selected image areas are grouped into a plurality of groups, each group comprising, for each of two or more or all of the plurality of raw material layers (e.g., 12-1 to 12-3) used to additively manufacture the three-dimensional workpiece (e.g., 3), exactly one of the selected image areas (e.g., 46-1; 46-2; 46-3).

As an optional part of 508, at 512, each of the groups of selected image areas is separately analyzed, using the trained machine learning model, to determine the at least one quality measure. To this end, each of the groups may be used as a separate input for the trained machine learning model.

Various modifications of the technique disclosed herein are possible. For example, measurements may be conducted on the three-dimensional workpiece (e.g., 3) to yield measurement results indicative of at least one quality measure of the three-dimensional workpiece. In this case, the set of images obtained at 502 may be used as set of training images together with the yielded measurement results to (re-)train the machine learning model (e.g., according to the method of Fig. 4). Other modifications may be apparent to those skilled in the art in view of the present disclosure.

## Claims

1. A method for non-destructively determining at least one quality measure of an additively manufactured three-dimensional workpiece (3) produced by selective layerwise solidification of raw material (14), the method comprising:
{a} obtaining (502) a set of images (40-1, 20-2, 40-3) that comprises, for each of a plurality of raw material layers (12-1, 12-2, 12-3) used to additively manufacture a three-dimensional workpiece (3), an image of at least a portion (44-1, 44-2, 44-3) of the raw material layer, wherein the image was acquired while the portion of the raw material layer depicted by said image was being irradiated for solidification thereof; and
{b} analyzing (504) the set of images, using a trained machine learning model, to determine at least one quality measure of the three-dimensional workpiece formed by the solidified portions of at least the plurality of raw material layers used to additively manufacture the three-dimensional workpiece.

2. A method of training a machine learning model usable to non-destructively determine at least one quality measure of an additively manufactured three-dimensional workpiece (3) produced by selective layerwise solidification of raw material (14), the method comprising:
{c} obtaining (402) a set of training images (40-a, 40-b, 40-c) that comprises, for each of a plurality of raw material layers (12-a, 12-b, 12-c) used to additively manufacture a three-dimensional test piece, a training image of at least a section (44-a, 44-b, 44-c) of the raw material layer, wherein the training image was acquired while the section of the raw material layer depicted by said training image was being irradiated for solidification thereof;
{d} obtaining (404) measurement results indicative of at least one quality measure of the produced three-dimensional test piece; and
{e} training (406) a machine learning model based on the set of training images and the at least one quality measure indicated by the measurement results such that the trained machine learning model can determine the at least one quality measure of a three-dimensional workpiece (3) based on a set of images (40-1, 40-2, 40-3) that comprises, for each of a plurality of raw material layers (12-1, 12-2, 12-3) used to additively manufacture the three-dimensional workpiece, an image of at least a portion (44-1, 44-2, 44-3) of the raw material layer, wherein the image was acquired while the portion of the raw material layer depicted by said image was being irradiated for solidification thereof, the three-dimensional workpiece being formed by the solidified portions of at least the plurality of raw material layers used to additively manufacture the three-dimensional workpiece.

3. The method of claim 1 or 2, wherein each of one or more first images of the set of images is or was generated based on a plurality of smaller images (41-1, 43-1; 41-2, 43-2; 41-3, 43-3) of different sub-portions (47-1, 49-1; 47-2, 49-2; 47-3, 49-3) of the raw material layer, wherein each of the plurality of smaller images was acquired while the respective sub-portion of the raw material layer was being irradiated for solidification thereof, the sub-portions of the raw material layer forming the portion (44-1, 44-2, 44-3) of the raw material layer.

4. The method of claim 1 or 2, wherein each of one or more second images of the set of images is or was acquired with a shutter time comprising the time during which the portion was being irradiated for solidification thereof and/or with a shutter time sufficient for an irradiation of the entire raw material layer used to additively manufacture the three-dimensional workpiece.

5. The method of any one of claims 1 to 4, wherein two or more or all of the layers of the plurality of raw material layers used to additively manufacture the three-dimensional workpiece are consecutive raw material layers.

6. The method of any one of claims 1 to 5, further comprising:
selecting (506), from each of two or more or all of the images of the set of images, at least one image area (46-1; 46-2; 46-3), each image area depicting a part (45-1; 45-2; 45-3) of the portion of the raw material layer depicted by said image;
wherein analyzing the set of images comprises analyzing (508) the selected image areas, using the trained machine learning model, to determine the at least one quality measure.

7. The method of any one of claims 1 to 6, wherein the at least one image area comprises a plurality of image areas, the method further comprising:
grouping (510) the selected image areas into a plurality of groups, each group comprising, for each of two or more or all of the plurality of raw material layers used to additively manufacture the three-dimensional workpiece, exactly one of the selected image areas,
wherein analyzing the set of images comprises separately analyzing (512) each of the groups of selected image areas, using the trained machine learning model, to determine the at least one quality measure.

8. The method of any one of claims 1 to 7, wherein the at least one quality measure is determined by the trained machine learning model for one of the plurality of raw material layers used to additively manufacture the three-dimensional workpiece.

9. The method of claim 8, wherein the at least one quality measure is determined by the trained machine learning model for the earliest irradiated raw material layer of the plurality of layers used to additively manufacture the three-dimensional workpiece.

10. The method of claim 8 or 9, wherein the at least one quality measure is determined for the portion of the one of the plurality of raw material layers used to additively manufacture the three-dimensional workpiece.

11. The method of any one of claims 1 to 10, wherein the at least one quality measure comprises:
a density index indicative of a density of at least a part of the three-dimensional workpiece;
a spatter index indicative of spatter produced when manufacturing at least a part of the three-dimensional workpiece;
a microstructure index indicative of a material microstructure of at least a part of the three-dimensional workpiece; and/or
a surface roughness index indicative of a surface roughness of a layer or surface of at least a part of the three-dimensional workpiece.

12. A computer program storing instructions which, when executed by at least one processor (30), cause the at least one processor to perform the method of any one of claims 1 to 11.

13. A carrier (32) carrying the computer program of claim 12.

14. A computing unit (28) comprising at least one processor (30) and at least one memory (32), the at least one memory storing instructions which, when executed by the at least one processor, cause the at least one processor to perform the method of any one of claims 1 to 11.

15. An additive manufacturing apparatus (100) configured to additively manufacture three-dimensional workpieces (3) by selective layerwise solidification of raw material (14), the apparatus comprising at least the carrier (32) of claim 13 and/or the computing unit (28) of claim 14.

## Amended claims

### Amended claims in accordance with Rule 137(2) EPC.

1. A method for non-destructively determining at least one quality measure of an additively manufactured three-dimensional workpiece (3) produced by selective layerwise solidification of raw material (14) wherein a scanning unit scans a laser beam (18) across a deposited raw material layer (12), the method comprising:
{a} obtaining (502) a set of images (40-1, 20-2, 40-3) that comprises, for each of a plurality of raw material layers (12-1, 12-2, 12-3) used to additively manufacture a three-dimensional workpiece (3), an image of at least a portion (44-1, 44-2, 44-3) of the raw material layer, wherein the image was acquired while the portion of the raw material layer depicted by said image was being irradiated for solidification thereof; and
{b} analyzing (504) the set of images, using a trained machine learning model, to determine at least one quality measure of the three-dimensional workpiece formed by the solidified portions of at least the plurality of raw material layers used to additively manufacture the three-dimensional workpiece.

2. A method of training a machine learning model usable to non-destructively determine at least one quality measure of an additively manufactured three-dimensional workpiece (3) produced by selective layerwise solidification of raw material (14) wherein a scanning unit scans a laser beam (18) across a deposited raw material layer (12), the method comprising:
{c} obtaining (402) a set of training images (40-a, 40-b, 40-c) that comprises, for each of a plurality of raw material layers (12-a, 12-b, 12-c) used to additively manufacture a three-dimensional test piece, a training image of at least a section (44-a, 44-b, 44-c) of the raw material layer, wherein the training image was acquired while the section of the raw material layer depicted by said training image was being irradiated for solidification thereof;
{d} obtaining (404) measurement results indicative of at least one quality measure of the produced three-dimensional test piece; and
{e} training (406) a machine learning model based on the set of training images and the at least one quality measure indicated by the measurement results such that the trained machine learning model can determine the at least one quality measure of a three-dimensional workpiece (3) based on a set of images (40-1, 40-2, 40-3) that comprises, for each of a plurality of raw material layers (12-1, 12-2, 12-3) used to additively manufacture the three-dimensional workpiece, an image of at least a portion (44-1, 44-2, 44-3) of the raw material layer, wherein the image was acquired while the portion of the raw material layer depicted by said image was being irradiated for solidification thereof, the three-dimensional workpiece being formed by the solidified portions of at least the plurality of raw material layers used to additively manufacture the three-dimensional workpiece.

3. The method of claim 1 or 2, wherein each of one or more first images of the set of images is or was generated based on a plurality of smaller images (41-1, 43-1; 41-2, 43-2; 41-3, 43-3) of different sub-portions (47-1, 49-1; 47-2, 49-2; 47-3, 49-3) of the raw material layer, wherein each of the plurality of smaller images was acquired while the respective sub-portion of the raw material layer was being irradiated for solidification thereof, the sub-portions of the raw material layer forming the portion (44-1, 44-2, 44-3) of the raw material layer.

4. The method of claim 1 or 2, wherein each of one or more second images of the set of images is a thermal image that is or was acquired with a shutter time comprising the time during which the portion was being irradiated for solidification thereof and/or with a shutter time sufficient for an irradiation of the entire raw material layer used to additively manufacture the three-dimensional workpiece.

5. The method of any one of claims 1 to 4, wherein two or more or all of the layers of the plurality of raw material layers used to additively manufacture the three-dimensional workpiece are consecutive raw material layers.

6. The method of any one of claims 1 to 5, further comprising:
selecting (506), from each of two or more or all of the images of the set of images, at least one image area (46-1; 46-2; 46-3), each image area depicting a part (45-1; 45-2; 45-3) of the portion of the raw material layer depicted by said image;
wherein analyzing the set of images comprises analyzing (508) the selected image areas, using the trained machine learning model, to determine the at least one quality measure.

7. The method of claim 6, wherein the at least one image area comprises a plurality of image areas, the method further comprising:
grouping (510) the selected image areas into a plurality of groups, each group comprising, for each of two or more or all of the plurality of raw material layers used to additively manufacture the three-dimensional workpiece, exactly one of the selected image areas,
wherein analyzing the set of images comprises separately analyzing (512) each of the groups of selected image areas, using the trained machine learning model, to determine the at least one quality measure.

8. The method of any one of claims 1 to 7, wherein the at least one quality measure is determined by the trained machine learning model for one of the plurality of raw material layers used to additively manufacture the three-dimensional workpiece.

9. The method of claim 8, wherein the at least one quality measure is determined by the trained machine learning model for the earliest irradiated raw material layer of the plurality of layers used to additively manufacture the three-dimensional workpiece.

10. The method of claim 8 or 9, wherein the at least one quality measure is determined for the portion of the one of the plurality of raw material layers used to additively manufacture the three-dimensional workpiece.

11. The method of any one of claims 1 to 10, wherein the at least one quality measure comprises:
a density index indicative of a density of at least a part of the three-dimensional workpiece;
a spatter index indicative of spatter produced when manufacturing at least a part of the three-dimensional workpiece;
a microstructure index indicative of a material microstructure of at least a part of the three-dimensional workpiece; and/or
a surface roughness index indicative of a surface roughness of a layer or surface of at least a part of the three-dimensional workpiece.

12. A computer program storing instructions which, when executed by at least one processor (30), cause the at least one processor to perform the method of any one of claims 1 to 11.

13. A carrier (32) carrying the computer program of claim 12.

14. A computing unit (28) comprising at least one processor (30) and at least one memory (32), the at least one memory storing instructions which, when executed by the at least one processor, cause the at least one processor to perform the method of any one of claims 1 to 11.

15. An additive manufacturing apparatus (100) configured to additively manufacture three-dimensional workpieces (3) by selective layerwise solidification of raw material (14), the apparatus comprising at least the carrier (32) of claim 13 and/or the computing unit (28) of claim 14.
